# EUROPEAN PATENT SPECIFICATION

(11) **EP 2 582 513 B1**
(45) Date of publication and mention of the grant of the patent: **10.02.2016**
(21) Application number: 10853342.3
(22) Date of filing: 15.06.2010
(51) Int. Cl.: B29D 30/52, B29D 30/06

(54) **AUTOMATIC ENVELOPE LEAK DETECTION DURING TIRE CURING**
AUTOMATISCHE HÜLLENLECKERKENNUNG WÄHREND DER REIFENVULKANISIERUNG
DÉTECTION AUTOMATIQUE DE FUITE D'ENVELOPPE PENDANT LA VULCANISATION DE PNEUS

(43) Date of publication of application: 24.04.2013
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: YOUNG, Robert, Simpsonville South Carolina 29681 (US); MANUEL, Stephen, Flat Rock North Carolina 28731 (US); CHRISTOPHER, Norman, Fountain Inn South Carolina 29644 (US)
(74) Representative: Dossmann, Gérard
(86) International application number: PCT/US2010/038613
(87) International publication number: WO 2011/159279

(56) References cited:
- US-A- 4 434 018
- US-A- 6 145 535
- US-A1- 2008 084 002
- US-A1- 2010 051 175

## Description

### BACKGROUND OF THE INVENTION

### Field of the Invention

This invention relates generally to a method and a computer program product for curing retreaded tires. More specifically, this invention relates to methods and apparatus for curing retread tires, which includes detecting and controlling a leak in a tire-membrane assembly during curing operations of a retreaded tire.

### Description of the Related Art

A retreaded tire consists of a new tread that is attached to a previously existing tire carcass. The carcass is prepared to receive the new tread by removing the prior tread, such as through buffing operations. The new tread is then applied to the tire carcass and is cured to secure the new tread to the carcass. Methods of curing retreaded tires include placing a retreaded tire at least partially within a flexible curing membrane to create a sealed fluid chamber between the curing membrane and the tire. The combination of a retreaded tire with an installed curing membrane is referred to herein as a tire-membrane assembly.

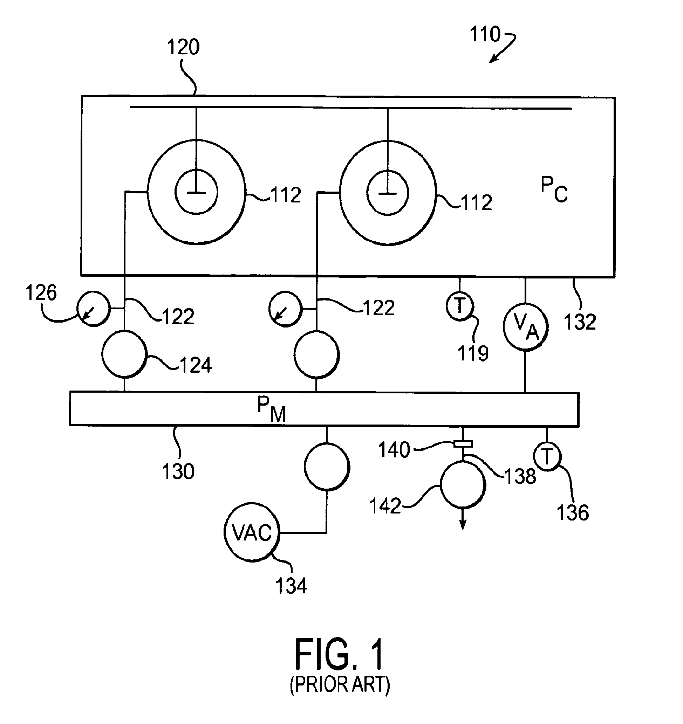

With reference to FIG. **1****,** a prior art curing system **110** is shown. In operation, a plurality of tire-membrane assemblies **112** are placed within a tire curing chamber **120,** such as an autoclave, in the prior art system **110.** Each tire-membrane assembly is then placed in fluid communication with a manifold **130** via a fluid passage **122.** The manifold **120** provides a source of pressure or vacuum for use by each fluid passage during particular stages of a retreaded tire curing process, as a pressure source **132** and a vacuum source **134** are operably connected to the manifold. Further prior art curing systems and methods are disclosed in US 2010/0051175 A1, US 4, 434,018 and US 2008/0084002 A1.

As stated above, during a retread curing operation, that is, in preparation for and during a retread curing process *(i.e.,* a curing cycle), each tire-membrane assembly may at certain instances be placed under vacuum. While under vacuum, however, the curing chamber is pressurized, such as at atmospheric pressure and pressures. Problems may arise, however, when the tire-membrane assembly develops a leak through its sealed fluid chamber, whereby the pressurized air from the curing chamber enters the sealed fluid chamber and ultimately the manifold through the fluid passage extending from the curing membrane. Because the manifold supplies all tire-membrane assemblies with vacuum or pressurized air through other fluid passages in the system, leaks within one tire-membrane assembly may affect the fluid pressure supplied to other tire-membrane assemblies - which may then compromise the curing of associated tires, as the contaminated fluid pressure may not comply with the curing specifications for the subject tires.

In prior art systems, such as is shown in FIG. **1****,** leaks are generally recognized in one of two manners. In a first instance, leaks may be determined as the tires are being prepared for a curing process. In preparation for a curing process, the sealed fluid chamber of a tire-membrane assembly **112** is placed under vacuum. Subsequently, an operator attaches to the curing membrane a fluid passage **122** extending from the manifold **130.** A manual valve **124** positioned along the fluid passage is closed prior to attachment of the fluid passage, thereby placing the fluid passage under atmospheric pressure. After attachment of the fluid passage, the valve is reopened to apply a vacuum to the tire-membrane assembly from the manifold **130.** In an effort to determine whether any tire-membrane assembly is leaking before beginning a curing process, the valve **124** is again closed and a gauge **126** visibly monitored by an operator for any fluctuation in pressure subsequent to the valve being closed. If a leak is present, fluid from the curing chamber, at atmospheric pressure, permeates the sealed fluid chamber of the tire-membrane assembly, and thereby increases the pressure within the fluid chamber and the fluid passage attached to the curing membrane above vacuum. Upon confirming the presence of a leak, the operator manually closes valve **124** and unloads the affected tire-membrane assembly **112.** Removal prevents the spread of pressure into the manifold **130** and ultimately to other tire-membrane assemblies, thereby avoiding a non-confirming cure for all tires contained within the curing chamber **120.**

In a second instance, leaks are monitored during a curing process, where the temperatures and pressures increase within the curing chamber to cure the new tread to the tire carcass. In such processes, prior art systems detect leaks by determining a pressure change within the manifold **130 -** and not independently within any fluid passage **122** associated with a particular tire-membrane assembly **112.** Leaks are determined by monitoring the pressures within the manifold with a transducer **136** and a controller. The manifold pressure **P_{M}** is monitored because any leak into a curing membrane will ultimately affect the manifold pressure. For example, during a curing cycle, the curing chamber may be pressurized above atmospheric pressure while the tire-membrane assembly remains under vacuum or at a pressure lower than manifold pressure **P_{M},** and if the curing membrane seal is compromised, the influx of pressure will travel through the corresponding fluid passage **122** and into the manifold **130** to increase the manifold pressure **P_{M}.** By solely monitoring the manifold **130,** however, an operator is unable to identify through the controller which tire-membrane assembly or assemblies **112** are sufficiently leaking to cause the undesired change in the manifold pressure **P_{M}.** In response to a change in manifold pressure, the operators will attempt to identify leaking tire-membrane assemblies by locating and manually inspecting each of the fluid passages **122,** such as by touching by hand or by using a temperature sensing instrument. If a passage is warm, it indicates that heated air from the curing chamber has penetrated the fluid passage through an associated curing membrane. If the curing cycle has not endured too long, an operator may manually close the valve **124** associated with the fluid passage of a leaking tire-membrane assembly **112** to prevent any further influx of pressure to the manifold **130.** If, however, the leaking assembly **112** is not located within a defined time limit, a non-confirming cure will result not only for the tire associated with the leak, but for all tires located within the curing chamber **120** since the leak has affected all tires through the manifold. Once confirming a non-confirming cure for all tires, each tire is removed and reprocessed *(i.e.,* buffed and retreaded) for subsequent curing, which increases costs and processing time.

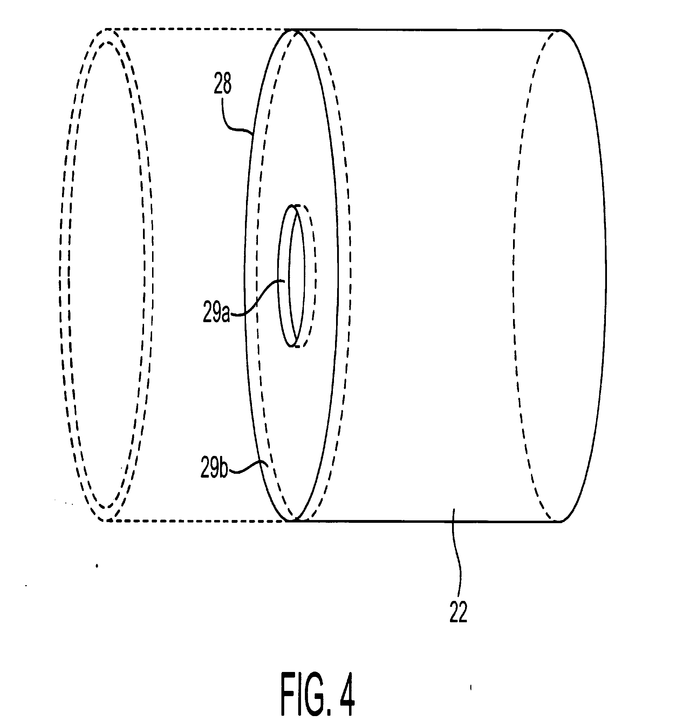

In the prior art systems, if a small leak arises, one remedy provides a flow restrictor **140** and a valve **142** positioned within the vent fluid passage **138** to release excess pressure from manifold **130** at a single, controlled rate. Flow restrictor **140** may comprise an orifice positioned within passage **138,** whereby the orifice is sized smaller than the inside dimensions of passage **138** to limit fluid flow through passage **138.** For example, the orifice may be positioned within a plate, whereby the plate prevents flow from continuing through passage **138** unless the flow passes through the orifice. See FIG. **4****,** for example. Fluid pressure is not released unless valve **142** is opened. Valve **142** may be controlled by a controller, which may send signals to cause the valve to open when the manifold pressure **P_{M}** reaches a desired threshold. Because the release of flow and pressure through restrictor **140** is limited, restrictor **140** cannot relieve manifold of greater pressures. If the leak is greater than the restrictor **140** can vent, the manifold pressure **P_{M}** will rise above a second threshold causing an alarm. The operator is signaled to find the offending tire and isolate it from the manifold by closing a corresponding valve **124.** If it is not found in time, or an even higher threshold is met, the cure for all tires is deemed non-conforming.

### SUMMARY OF THE INVENTION

The invention relates to a method for curing retreaded tires according to claim 1 and to a computer program product according to claim 12.

Particular examples include a system for curing retreaded tires that includes a tire curing chamber in fluid communication with a chamber pressure source, the tire curing chamber being configured to receive a plurality of retreaded tires for curing, a curing membrane being mounted upon each retreaded tire to form a sealed fluid chamber about a tread area of the tire. The system also includes a plurality of membrane fluid passages, each of the membrane fluid passages extending between a membrane connecting portion of the membrane fluid passage and the membrane pressure source and/or the membrane vacuum source, each of the plurality of membrane fluid passages including: a valve capable of controlling the flow of fluid through the passage; and, a transducer operably connected to the membrane fluid passage for measuring the fluid pressure contained within the passage. The system further includes a controller in operable communications with each of the transducers and valves of the membrane fluid passage to control the fluid flow through each of the plurality of membrane fluid passages.

The foregoing and other objects, features and advantages of the invention will be apparent from the following more detailed descriptions of particular embodiments of the invention, as illustrated in the accompanying drawing wherein like reference numbers represent like parts of the invention.

### BRIEF DESCRIPTION OF THE DRAWINGS

FIG. 1 is a schematic showing a prior art retreaded tire curing system.
FIG. **2** is a schematic showing an improved retreaded tire curing system in accordance with an embodiment of the invention.
FIG. **3** is a cross-sectional view of a tire-membrane assembly.
FIG. **4** is a cross-sectional perspective view of the flow restrictor of the membrane fluid passage, according to an embodiment of the invention.
FIG. **5** is a schematic showing a programmable logic controller for use with the retread curing system, in accordance with an embodiment of the invention.
FIG. **6** is a view showing a display screen of a user-interface of the retreaded tire curing system, according to an embodiment of the invention.

### DETAILED DESCRIPTION OF PARTICULAR EMBODIMENTS

Particular embodiments of the present invention provide methods and computer program products for curing retreaded tires, which includes detecting fluid leaks in tire-membrane assemblies during retreaded tire curing operations. Curing operations include preparations made prior to initiating a curing process, while the curing process includes elevating the heat and pressure within a curing chamber to cure a tread to a tire carcass.

Particular embodiments of such methods may include the step of placing a plurality of tire-membrane assemblies within a tire curing chamber of a tire curing system, each tire-membrane assembly comprising a retreaded tire and a flexible curing membrane installed about at least a portion of the retreaded tire to form a sealed fluid chamber between the membrane and the tire. Before a curing process begins, a plurality of retreaded tires is loaded into a curing chamber of a curing system for curing. A flexible curing membrane is installed on each tire to create a sealed fluid chamber between the membrane and at least a portion of the tire. The flexible curing membrane may comprise any flexible membrane for curing a tire that is known to one of ordinary skill in the art, which may comprise one or more curing membranes arranged about the tire.

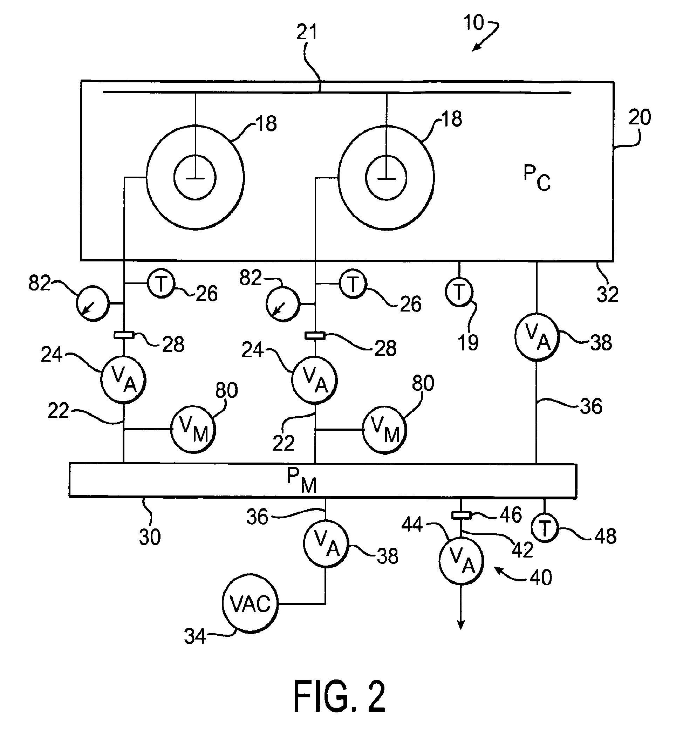

In particular embodiments, such methods may also include the step of placing the sealed fluid chamber of the tire-membrane assembly under substantial vacuum prior to placing the tire-membrane assembly into the curing chamber, or prior to attaching an membrane fluid passage to the curing membrane. As used herein, "vacuum" or "under vacuum" means providing a fluid pressure equal to zero psia (pounds per square inch absolute), and "substantial vacuum" or "substantially under vacuum" means zero psia to less than 5 psia (334,7 hPa). Tire-membrane assemblies may be loaded into and retained within the curing chamber according to any known method. In the exemplary embodiment shown in FIGS. **1** and **2****,** the curing chamber includes a track upon which the tire-membrane assemblies are mounted. According to this system, tire-membrane assemblies are loaded and unloaded sequentially, and therefore, when attempting to unload a particular tire-membrane assembly, the assemblies loaded before or after the particular assembly will have to be first unloaded.

Additional steps of such methods may further include connecting a membrane fluid passage to each curing membrane of each tire-membrane assembly where each passage extends in fluid communication between one of the curing membranes and a pressure source and/or a vacuum source, each membrane fluid passage including a transducer for measuring pressure within the passage. According to this step, the membrane fluid passage is placed in fluid communication with a corresponding curing membrane. The fluid passage may comprise a hose, tube, conduit, pipe, or the like, and is also in fluid communication with a membrane pressure source and/or a membrane vacuum source. In particular embodiments, the fluid passage is fluidly connected to a manifold, which operates as both a membrane pressure source and membrane vacuum source, whereby the manifold in fluid communication with a manifold pressure source and a manifold vacuum source. In particular embodiments of the present invention, the manifold includes a manifold transducer for measuring pressure within the manifold. A pressure source may comprise a compressor or any other device known to one of ordinary skill in the art. As the fluid passage may be connected to the pressure and/or vacuum sources prior to the step of operably placing the membrane fluid passage into fluid communication with the curing membrane, a valve in fluid communication with any connected pressure and/or vacuum source is closed to prevent any fluid flow through the fluid passage before connecting the passage to a curing membrane.

Particular embodiment of the inventive method may include the steps of verifying the connection of each fluid passage to a tire-membrane assembly from the step of connecting before the step of initiating by receiving one or more signal responses from each transducer, the one or more signal responses generated as a function of the fluid pressure contained within the one of the membrane fluid passages over a desired period of time; and determining through the controller whether the one or more signal responses received in the prior step indicate a desired change in pressure in each corresponding curing membrane. These steps may be accomplished by utilizing a programmable logic controller to evaluate signals sent from a transducer representing the fluid pressure within the fluid passage. In particular instances, signals received from the transducer prior to connecting the fluid passage to the curing membrane are compared to signals received after achieving the connection to determine if a fluid pressure change **P_{Δ}** arises. In other instances, the fluid passage pressure **P_{FP}** may be compared to a base pressure, such as, for example, atmospheric pressure or the sealed fluid chamber pressure **P_{T}** measured prior to connection. For example, when the sealed fluid chamber pressure **P_{T}** of the tire-membrane assembly is maintained at vacuum and the fluid passage pressure **P_{FP}** is at atmospheric pressure (when the valve is closed between the fluid passage and any pressure and/or vacuum source), the pressure **P_{FP}** will decrease upon connection of the fluid passage to the curing membrane and the signals received from the transducer before and after the connection will indicate the change in pressure **P_{Δ}** when compared by the controller. The change in pressure **P_{Δ}** will indicate a proper connection was achieved.

Particular embodiments of the present invention may further include indicating through the controller that a proper connection was made between each membrane fluid passage and the corresponding tire-membrane assembly when the transducer corresponding to each such tire-membrane assembly fluid passage indicates a desired reduction in pressure subsequent to completing the step of connecting. Once the controller determines a proper connection was achieved, the controller may provide output to a user-interface to indicate to an operator that a proper connection was achieved with a particular mounting location. For example, the output may facilitate a particular change in the display of the user-interface, such as by displaying a text-based message, a signal, or a change in color. An auditory signal or printout may also be provided. Because the curing chamber is capable of receiving a plurality of tires for curing, the user interface will associate the connection with one of a plurality of mounting positions within the curing chamber. If, upon review of the user interface, the operator determines that the tire-membrane assembly was attached to the incorrect fluid passage, and therefore the incorrect mounting position on the user interface, the operator can then disconnect the fluid passage from the tire-membrane assembly, select the proper fluid passage, and repeat the step of operably placing the fluid passage in fluid communication with the curing membrane with the newly selected fluid passage. Once a tire-membrane assembly has been properly loaded into the curing chamber and connected to a fluid passage, such methods include repeating the previous steps until the desired quantity of tire-membrane assemblies are loaded into the curing chamber and properly connected to a corresponding fluid passage.

After properly connecting fluid passages to tire-membrane assemblies, steps may be taken to determine whether any leaks exist in the tire-membrane assemblies. Therefore, particular embodiments of the present invention may further include a step of opening the valve associated with each membrane fluid passage for a period of time and then subsequently closing the valve before initiating a curing process. After a tire-membrane assembly has been properly loaded and connected to a fluid passage, the sealed fluid chamber of the tire-membrane assembly is placed under pressure, such as under vacuum by way of the connected fluid passage. Accordingly, particular steps of such methods may further include placing the sealed fluid chamber of the tire-membrane assembly under vacuum by way of the associated fluid passage. In particular embodiments, this step may be achieved by opening a valve positioned along the fluid passage to fluidly connect a vacuum source, such as a manifold being placed under vacuum, with the sealed fluid chamber. To ensure that a proper seal has been achieved about the sealed fluid chamber, further steps of such methods may include closing the fluid connection between the vacuum source and the sealed fluid chamber, which may be achieved by subsequently closing the valve along the fluid passage. After the valve is closed, particular embodiments of the present invention include the step of receiving, before the step of initiating a curing process and after the step of connecting, one or more signal responses from each transducer in operable communication with each membrane fluid passage, the one or more signal responses generated as a function of the fluid pressure contained within each corresponding membrane fluid passage over a desired period of time. After the step of receiving, further steps may include determining through the controller whether the signal responses received in the prior step indicate an undesired change in pressure. For example, an undesired change in pressure exists when the pressure change **P_{Δ}** exceeds a defined threshold value **P_{Δ, L}**. In particular embodiments, the step of determining includes comparing the one or more signal responses received in the step of receiving for each of the fluid passages to one or more signals responses received from a transducer in a manifold to determine whether the undesired change in pressure is present within the curing membrane, the manifold signals being generated as a function of the fluid pressure contained within the manifold. In other embodiments, where the step of receiving includes: receiving one or more signal responses from a manifold transducer, the one or more signal responses generated as a function of the fluid pressure contained within the manifold; and, receiving one or more signal responses from a curing chamber transducer, the one or more signal responses generated as a function of the fluid pressure contained within the curing chamber, whereby the step of determining includes calculating a first difference between a curing chamber pressure and a manifold pressure at a given time based upon the signals received during the step of receiving, calculating a second difference between a curing chamber pressure and a manifold pressure at a given time based upon the signals received during the step of receiving, and comparing the first difference with the second difference to determine whether an undesired leak is present. For example, to determine a change in pressure **P_{Δ},** controller may compare different fluid passage pressure **P_{FP}** signals obtained over time, or controller may compare the membrane fluid passage pressure **P_{FP}** signals to manifold pressures **P_{M}** (or membrane pressure or vacuum source pressures). Curing chamber pressures **P_{C}** may also be used to identify a pressure change **P_{Δ}.** See paragraphs [0043]-[0044] for further discussions on methods for determining pressure changes and leaks, which may be employed.

Once an undesired change in pressure or leak is determined, further steps may include identifying each tire-membrane assembly connected to each membrane fluid passage determined to have experienced an undesired change in pressure in the preceding step of determining, the step of indentifying being facilitated by the controller. The step of identifying may be accomplished through a user-interface, an audible alarm or sound, and/or by way of a printer or other similar device.

Particular embodiments of the present invention may include initiating a curing process whereby the fluid within the curing chamber is heated to a desired temperature and pressurized to a desired pressure. In further embodiments, this step may initiate once it is determined that the tire-membrane assemblies loaded within the curing chamber do not have any significant leaks. As the curing operation resumes with beginning a curing process *(i.e.,* a curing cycle), heated fluid (such as air) is supplied to the curing chamber, which is pressurized to a pressure **P_{C}** as desired - such as according to a defined curing specification. Likewise, the sealed fluid chamber within the tire-membrane assembly may be placed under vacuum or pressurized to a pressure **P_{T}** as desired during the curing process. While pressures **P_{C}** and **P_{T}** may vary as desired throughout the curing process, particular embodiments provide a sealed fluid chamber pressure **P_{T}** that is less than the curing chamber pressure **P_{C}**. Therefore, if a leak develops through a sealed fluid chamber during the curing process, the pressure **P_{FP}** in a fluid passage directly connected to the associated curing membrane will increase as the higher tire chamber pressure **P_{C}** initially permeates the sealed fluid chamber and eventually permeate the attached fluid passage. A flow restrictor may be placed along each membrane fluid passage to control the flow rate of fluid within the passage. The flow restrictor will allow slower rates associated with small increases in pressure attributed to small leaks within a tire-membrane assembly. However, when greater pressures associated with larger leaks cause increased fluid flows, the flow restrictor will not allow the fluid to flow at the rates associated with the larger leak. A transducer positioned within each membrane fluid passage is arranged to measure this back-up of increased pressure, allowing a controller to evaluate such pressures.

Accordingly, further steps of such methods may include receiving a one or more signal responses from each transducer, each signal response being generated as a function of the fluid pressure contained within the one of the membrane fluid passages and then determining through a controller whether the one or more signal responses received in the prior step indicate an undesired change in pressure in each corresponding curing membrane. In particular embodiments, the step of determining includes assessing whether the undesired change in pressure is above a defined threshold value. For example, to determine a change in pressure **P_{Δ},** controller may compare different fluid passage pressure **P_{FP}** signals obtained over time, or controller may compare the membrane fluid passage pressure **P_{FP}** signals to manifold pressures **P_{M}** (or membrane pressure or vacuum source pressures). Curing chamber pressures **P_{C}** may also be used to identify a pressure change **P_{Δ}**. See paragraphs [0043]-[0044] for further discussions on methods for determining pressure changes and leaks, which may be employed. If it is determined that a leak has arisen, the controller will send a signal to a user interface to indicate to the operator that the sealed fluid chamber within a particular tire-membrane has been breached with a fluid leak. If the leak was detected within a specified period of time T subsequent to the initiation of the curing process, the defective tire-membrane assembly may be removed from the curing chamber for curing at a later time without a need for reprocessing. If, however, the leak was not detected until a time after the specified period of time T in which tire removal is allowable, the fluid passage valve associated with the leaking tire-membrane assembly is closed to prevent the leak from affecting the vacuum or pressure source, and the affected tire, which will be removed after the curing process has completed, will be reprocessed for subsequent recuring. Accordingly, particular embodiments of the present invention may include closing a valve in operable communication with each membrane fluid passage determined by the controller in the preceding step to have experienced an undesired change in pressure, the step of closing being accomplished by the controller sending a signal for the valve to close. In other variations, an operator may manually close the valve or another manually actuated valve positioned along the fluid passage. Further steps may include identifying each tire-membrane assembly connected to each membrane fluid passage having a valve closed in the preceding step of closing, the step of identifying being facilitated by the controller. The step of identifying may be accomplished by a user-interface, an audible alarm or signal, and/or a printer or the like.

Particular embodiments of the present invention include repeating the steps of receiving, determining, and closing recited in paragraph [0026] for each of the membrane fluid passages for a second desired time period during the curing process. The methods and steps described herein may be employed, in whole or in part, and repeated continuously or intermittently as desired during the curing operations to monitor pressure changes and determine if any leaks in any tire-membrane assembly are present. If a leak is detected, particular steps according to the methods and apparatus described herein are employed to remedy or isolate any such leak.

The methods described herein may be employed by a retreaded tire curing system and embodied in computer software as instructions, such as those embodied on a non-transitory computer readable storage medium, for example. Exemplary embodiments of a retread curing system for use in performing such methods are discussed in further detail below.

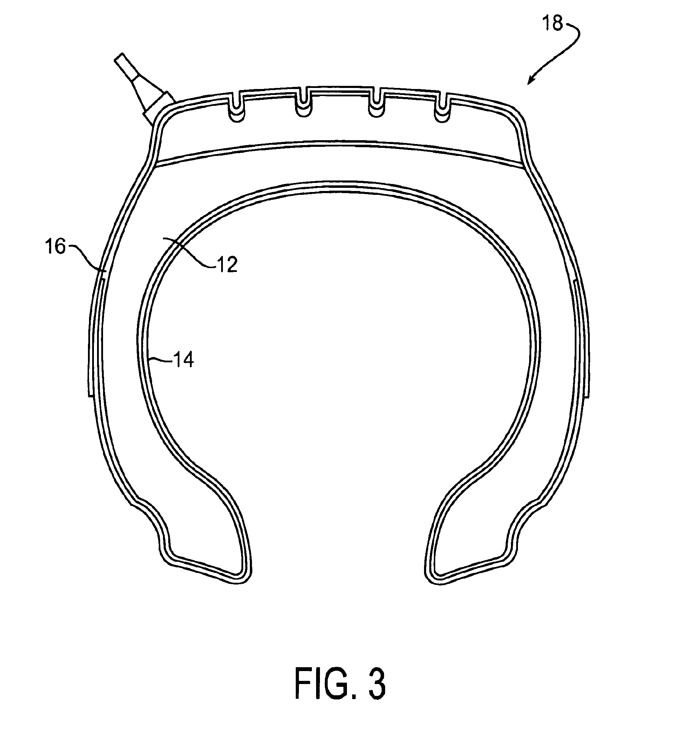

A retreaded tire curing system **10** for use in the methods described herein is generally shown in FIG. **2**. Curing system **10** includes a tire curing chamber or vessel **20** that is in fluid communication with a chamber pressure source (not shown). In operation, one or more retreaded tires **12** are placed within the chamber **20** for subsequent curing, and may be suspended by a track **21** as shown, for example. Curing chamber **20** includes a transducer **19** placed in operable communication therewith for measuring curing chamber pressures **P_{C}**, which may be sent to a controller **50** as signals for use in determining leaks within any tire-membrane assemblies. With reference to FIG. **3****,** each retreaded tire **12** is at least partially surrounded by a curing membrane **14** prior to curing to form a sealed fluid chamber **16** between the curing membrane and at least a portion of the tire. Curing membrane **14** may comprise any flexible curing membrane known to one of ordinary skill in the art, such as one or more envelopes, for example, to create **the** sealed fluid chamber **16.** The combination of a tire **12** with curing membrane **14** is referred to herein as a tire-membrane assembly **18.**

Prior to initiating any curing process, each curing membrane **14,** and therefore each tire-membrane assembly **18,** is placed in fluid communication with a membrane pressure source and/or a membrane vacuum source. With reference to the embodiment of FIG. **2****,** the membrane pressure and/or vacuum source is a manifold **30,** which generally comprises a chamber pressurized and/or placed under vacuum as desired by a manifold pressure source **32** and a manifold vacuum source **34.** To achieve the fluid connection between the curing membrane **14** and the manifold **30,** a membrane fluid passage **22** is used. A fluid passage may comprise any known apparatus for transferring pressurized or non-pressurized (vacuum) fluids, such as a hose, pipe, conduit, tubing, or the like.

In the embodiment shown in FIG. **2****,** positioned along membrane fluid passage **22** is a valve **24,** a transducer **26,** and a flow restrictor **28.** Transducer **26** and flow restrictor **28** are positioned between valve **24** and an end of passage **22** for attachment to curing membrane **14,** or between valve **24** and curing chamber **20** in other variations. Further, transducer **26** is placed between flow restrictor **26** and the curing membrane **14** along passage **22** for the purpose of measuring any back-up pressure created by fluid flowing from the curing membrane **14** to the flow restrictor **26.** Valve **24** controls the flow of fluid between the manifold **30** and the curing membrane **14** (and therefore to the sealed fluid chamber **16**), and may comprise any known valve capable of fully or partially restricting fluid flow through fluid passage **22.** For example, in particular variations, valve **24** may comprise a pressure regulator valve, which may be used with or without flow restrictor **28** positioned along fluid passage **22.** In the embodiment shown, actuation of valve **24** is controlled by a controller **50** to which the valve and/or a valve actuator (not shown) is operably connected. A valve actuator may comprise any known means of actuating a valve, such as a solenoid, for example. In certain instances, the determination to open and close valve **24** is logically determined by a processor **52** based upon stored instructions and/or logic utilizing input received from transducer **26,** the transducer sending signals to the controller **50** corresponding to the pressure of the fluid present within fluid passage **22.** In other variations, valve **24** is manually actuated, whereby an operator manually actuates valve **24** based upon output received from controller **50** and the signals received from transducer **26.** A manual valve **80** and/or a pressure gauge **82** may also be positioned along fluid passage **22** in addition to valve **24.**

With reference to FIGS. **2** and **4****,** a flow restrictor **28** is positioned within fluid passage **22** to provide a means of controlling the fluid flow rate within the fluid passage **22.** A transducer **26** is positioned along each passage **22** between the flow restrictor **28** and an end of passage **22** for connection to a curing membrane **16.** In operation, restrictor **28** allows fluid flow rates within passage **22** up to a maximum rate, whereby increased flow rates associated with the pressures arising from larger leaks in a tire-membrane assembly **18** are unable to completely pass through restrictor **28** to thereby cause an increase in pressure measurable by transducer **26.** It is this pressure that is evaluated to determine if the pressure increase is significant to warrant further action by controller **50.** In particular embodiments, flow restrictor **28** comprises flow passage reduction, that is, a reduction in the cross-sectional internal opening through which flow passes. In the embodiment shown in FIG. **4****,** the flow passage reduction comprises an orifice **29a** positioned within a plate **29b** extending across passage **22.** Orifice **28** regulates fluid flow there through according to the size of the orifice opening. According to one embodiment, orifice **28** forms an opening having a diameter of approximately 0.035 inches (0,89mm). Other sized orifice openings may be used to achieve different flow rates as desired for different conditions. Orifice **28** may also comprise a variable opening, which may be controlled by controller **50** in particular variations. In other embodiments, flow restrictor **28** may comprise a reduction in the passage diameter or a pressure regulator or any other similar device known to one of ordinary skill in the art, and may be controlled by controller **50.** Still, it is understood that flow restrictors **28** may not be employed in other variations of system **10.**

With continued reference to FIG. **2****,** manifold **30** is a chamber capable of retaining pressurized fluid for the collective use by a plurality of fluid passages **22,** and therefore a plurality of tire-membrane assemblies **18.** Manifold **30** is placed in fluid communication with both a manifold pressure source **32** and a manifold vacuum source **34** through one or more fluid passages **36.** In the embodiment shown, pressure source **32** is the tire curing chamber **20,** but in other instances, the pressure source may be a compressor or any other known device capable of pressurizing fluid. As with fluid passage **22,** fluid passages **36** may comprise any known apparatus for transferring pressurized or non-pressurized (vacuum) fluids, such as a hose, pipe, conduit, tubing, or the like. Further, each fluid passage **36** includes a valve **38** to restrict the flow of fluid as desired. Valve **38** may form any valve contemplated for valve **24.** In the embodiment shown, the actuation of valve **38** is controlled by controller **50,** but may be controlled manually in other instances.

In the embodiment shown, manifold **30** includes a vent **40** for releasing small pressure increases from the manifold. To facilitate the release of pressure, vent **40** is in fluid communication with manifold **30** via a fluid passage **42.** Fluid passage **42** may form any passage contemplated for passages **22** and **36.** Vent **40** also includes a valve **44** and a flow restrictor **46** positioned within fluid passage **42** between the valve **44** and the manifold **30.** As with fluid passage **22,** flow restrictor **46** controllably releases pressurized fluid to remedy small increases in pressure within manifold **30.** Flow restrictor **46** may comprise a plate and orifice as described in FIG. **4** or any other flow restrictor contemplated by restrictor **28.** Valve **44** may form any valve contemplated for valves **24** and **38,** while the actuation of valve **44** may be controlled by and actuator and controller **50.** As with the other valves, valve **44** may be controlled manually in other instances. For the purpose of measuring the fluid pressure within manifold **30,** a transducer **48** is placed in operable communication with manifold **30.** Transducer **48** is also in operable communication with processor **50,** to which transducer **48** provides inputs to assist in the logical operation of system **10.**

Each transducer **19, 26, 48** generates a signal response corresponding to the fluid pressure then presently contained within curing chamber **20,** fluid passage **22,** and manifold **30,** respectively. The signal response may be represented by a value, which may represent current, voltage, resistance, or any other characteristic of the signal response. Ultimately, the signal is sent to the programmable logic controller **50** for evaluation and processing by way of any communication means known to one of ordinary skill in the art, such as an input/output (I/O) cable **54,** by infrared signal, by radio frequency, by one or more cables, including fiber optics, for example.

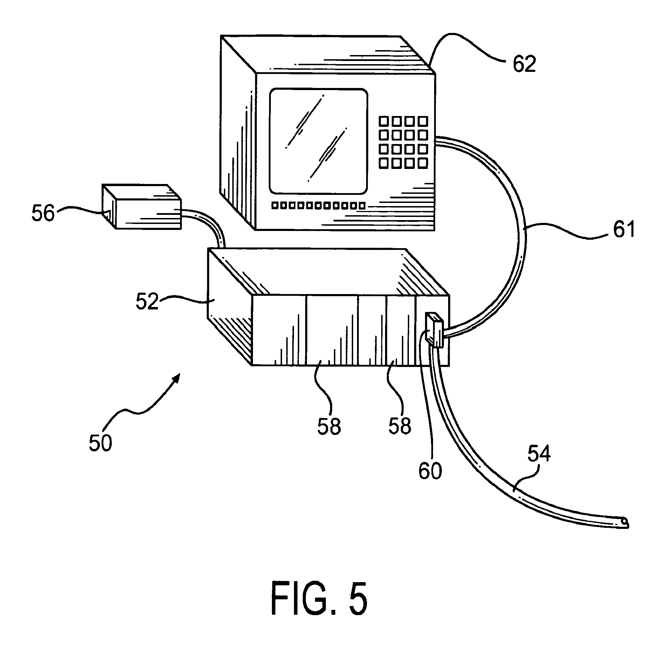

With reference to FIG. **5****,** programmable logic controller **50** generally receives signal responses from each transducer **19, 26, 48** to monitor and control the flow and pressurization of fluid within tire-membrane assemblies **18** by controlling the actuation of valves **24, 38, 44** and the generation of fluid pressure and vacuum through any pressure and vacuum source. Controller **50** includes a logic processor **52,** which may be a microprocessor, a memory storage device **56,** such as RAM (random access memory), ROM (read-only memory), PROM (programmable read-only memory), and at least one input/output (I/O) cable **54** for communicating with system **10.** Further, controller may include an I/O slot **58** for housing an I/O card having I/O cable connector **60.**

An operator may utilize a user-interface **62** to monitor the pressures and the curing operation of system **10,** and to initiate operations, program, or otherwise control or instruct, the operation of controller **50** and system **10.** User-interface **62** and controller **50** may communicate by way of I/O cable **61** or any other means of communication known to one of ordinary skill, such as by wireless communications, for example. Generally, controller **50** may be programmed by any known graphical or text language. Programmed instructions, data, input, and output may be stored in a memory storage device **56,** which is accessible to processor **52.** Memory device 56 may comprise any data storage device known to one of ordinary skill in the art, such as hard disk drives, optical storage devices, semiconductor memory such as flash memory, magnetic storage devices, and the like. Processor **52** executes programmed instructions, calculations, and measurements, as wells as other operations and methods discussed herein. Memory storage device **56** also stores inputs, outputs, and other information, such as, for example, data representing pressures measured by transducers **19, 26, 48** for use by processor **52** in performing its operations. Controller **50** may also communicate with a printer or other similar device to communicate output to a user in a physical form, such as printed on paper or any other known medium, for example.

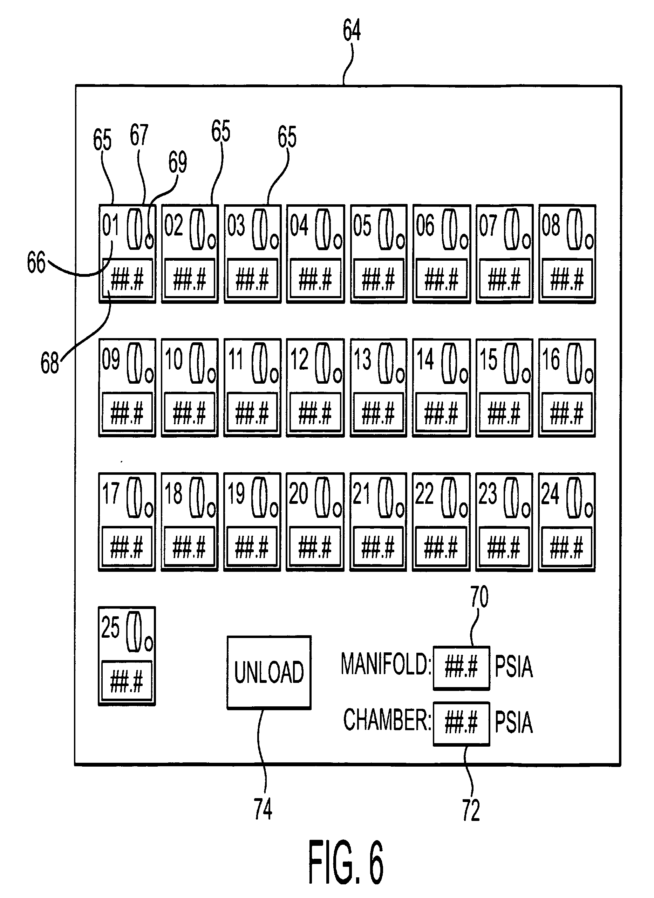

With reference to FIG. **6****,** an exemplary embodiment of a display screen **64** associated with user-interface **62** is shown. In accordance with the methods described above, in particular embodiments, display screen **64** provides various information and alerts pertaining to each fluid passage **22** and/or tire-membrane assembly **18.** For example, display screen **64** provides a plurality of position displays **65** for association with each fluid passage **22** and any tire-membrane assembly **18** attached to such passage **22** within the curing chamber **20.** An identifying insignia **66** is used in association with each position display **65** to uniquely identify each position within curing chamber **20.** With further regard to each position display **65,** the following may also be provided: a selectable icon **67** for an operator to select when desiring to send instructions or input to controller **50;** a field **68** identifying the present pressure in fluid passage **22** as measured by transducer **26;** and a status identifier **69** indicating to an operator the status of any connected assembly **18,** such as when the pressurization of fluid passage **22** is proper or when the pressurization indicates a leak in the sealed fluid chamber **16** within a tire-membrane assembly **18.** Display **64** may also include fields identifying the manifold pressure **70** provided by transducer **48** and the curing chamber pressure **72,** and may further include a selectable icon **74** to terminate or pause the curing process for the purpose of unloading any leaking tire-membrane assemblies **18** from curing chamber **20.** Still, other information, alerts, requests for instructions, and means allowing a user to provide instructions or inputs to controller **50** may be displayed or provided through display **64** in accordance with the methods and other aspects of the inventions described herein.

In operation, according to an exemplary embodiment of the retread curing system **10,** an operator loads each tire-membrane assembly **18** into curing chamber **20.** Each tire-membrane assembly **18** is then fluidly connected independently to one or more membrane fluid passages **22.** The fluid passages **22** in turn are connected to a membrane pressure source and/or a membrane vacuum source. In the embodiment of FIG. **2****,** a manifold **30** comprises both the membrane vacuum source and the membrane pressure source. Each fluid passage **22** includes a transducer **26** for measuring the pressure within the passage **22.**

Upon connection of each fluid passage **22** to a tire-membrane assembly **18,** controller **50** determines whether the fluid passage **22** was properly connected to the curing membrane **16** based upon the pressure measurements obtained from a corresponding transducer **26** prior to and subsequent to the connection of the fluid passage **22** to a tire-membrane assembly **18.** For example, a proper connection may arise when a reduction of pressure occurs within passage **22** upon connection, such as when the sealed fluid chamber within the tire-membrane assembly **18** is generally placed under vacuum while the fluid passage **22** is at atmospheric pressure prior to attachment of fluid passage **22.** For example, a pressure reduction of 5 psi (344,7 hPa) or more may indicate a proper connection. In other variations, a pressure increase or the finding of no change in pressure may indicate a proper connection.

If it is determined that a proper connection occurs between a fluid passage **22** and a tire-membrane assembly **18,** controller **50** indicates a successful connection to an operator through user-interface **62 -** such as by way of display screen **64.** For example, for a particular position display **65,** status identifier **69** turns blue when a proper connection occurs. Identifier **69** may also indicate no connection or an improper connection, such as by changing the color to yellow. By receiving indication from the controller **50** in association with an identifying insignia **66** that a proper connection has been made, an operator is also able to determine if the tire-membrane assembly **18** was connected to the desired fluid passage **22.** For example, after connecting the first tire-assembly **18** with a fluid passage **22** associated with the first identifying insignia **66** labeled "01," an operator will be able to determine whether the second tire-membrane assembly was properly connected to the second fluid passage **22** or improperly connected to another fluid passage **22** by observing on the display screen **64** whether the newly-altered identifier **69** *(i.e.,* newly changed to blue) was associated with the second identifying insignia **66** labeled "02" or an identifier **69** associated with another identifying insignia **66.** If the most recently connected tire-membrane assembly **18** was not connected to the desired fluid assembly **22,** the operator may then remove the connection and repeat the connection process with another fluid passage **22** until the desired fluid passage **22** is connected. Upon receiving an indication that a proper connection exists, an operator may engage a selectable icon **67** to indicate that the tire-membrane assembly is mounted in its desired position and to authorize initiation of the next procedural step. After engaging the selectable icon **67,** status identifier **69** may be altered to reflect the engagement - such as by changing to the color green, for example.

Once a tire-membrane assembly **18** has been properly connected to a membrane fluid passage **22,** steps may be taken to determine if there is any leak in the sealed fluid chamber **16** before initiating a curing process within curing chamber **20** by monitoring fluid passage **22** for any change in pressure with transducer **26.** These steps may begin, for example, after an operator engages the selectable icon **67** as discussed in the previous paragraph. Steps for determining a leak include opening the valve **24** along passage **22** to expose sealed fluid chamber **16** to the pressure from within manifold **30,** subsequently closing valve **24** after a period of time, monitoring the pressure within passage **22** with transducer **26** after closing valve **24** to determine whether there is any pressure change **P_{Δ}** within passage **22** after closing valve **24.** Determining a change in pressure **P_{Δ},** during any phase of a curing operation, may occur in any of a variety of manners, including determining a pressure change and comparing the same to a threshold pressure change value, or by measuring a pressure and comparing the measured pressure to a threshold pressure value. See below and paragraph [0044] for exemplary manners of determining pressure changes for the purpose of identifying leaks. In an exemplary embodiment, manifold **30** is placed under vacuum and curing chamber **20** is at any pressure above vacuum (such as atmospheric pressure, for example), and after opening and closing valve **24** after a period of time (such as 30-60 seconds, for example), controller **50** receives signals from transducer **26** to determine whether there is any increase in pressure within passage **22,** which would reflect the influx of curing chamber fluid through a leak in the sealed fluid chamber **16.** If controller **50** identifies a leak, the controller **50** updates the status identifier **69** within a corresponding position display **65** to indicate the existence of a leak in association with a tire-membrane assembly **18.** For example, a leak may be indicated by changing the status identifier **69** to red. Because small leaks may be acceptable, a leak may not be recognized on display **64** if the leak is not significant, that is, if the measured leak does not surpass a minimum pressure change threshold **P_{Δ, L}**, such as may be indicated by a tire curing specification. For example, a change in pressure threshold **P_{Δ}**, **_{L}** indicating a significant leak may comprise a pressure change of at least 5 psia, 10 psia, 15 psia, or 20 psia (344,7 hPa, 689,5 hPa, 1034,2 hPa or 1379 hPa).

To determine a change in pressure **P_{Δ}**, controller **50** may compare different fluid passage pressure **P_{FP}** signals obtained over time, or controller **50** may compare the membrane fluid passage pressure **P_{FP}** signals to manifold pressures **P_{M}** (or membrane pressure or vacuum source pressures). For example, when membrane fluid passage pressure **P_{FP}** should generally equal manifold pressures **P_{M},** membrane fluid passage pressure **P_{FP}** may be compared directly to manifold pressures **P_{M}** at particular instances to determine a pressure change **P_{Δ},** or a first differential between curing chamber pressure **P_{C}** and manifold pressures **P_{M}** at particular instances may be compared to a second differential between curing chamber pressure **P_{C}** and membrane fluid passage pressure **P_{FP}** at particular instances to determine a pressure change **P_{Δ}.** Other methods for determining pressure changes and leaks may be employed. For example, In an undesired change in pressure **P_{Δ}** may be determined by comparing a measured pressure **P_{FP}** with a pressure threshold **P_{L}**, whereby an undesired change may be identified if reaching or exceeding the pressure threshold **P_{L}**, where such threshold value may represent a particular deviation from **P_{M}, P_{C}**, or an earlier obtained value for **P_{FP}**, for example.

Upon receiving acknowledgement that a sufficient leak exists, the operator may remove the respective tire-membrane assembly **18** from the curing chamber **20** or choose to let the assembly **18** remain, even though the associated tire will have to be reprocessed for subsequent curing. Once controller **50** determines that no leaks are present in any tire-membrane assembly **18** contained within curing chamber **20,** a process for curing the retreaded tires begins. In the alternative, if controller **50** determines the presence of leaks, an operator may override the controls and choose to cure the assemblies **18** with a known cure in hopes that the seal may occur as the curing process begins. And if no seal in fact arises, the tire-assembly **18** can be isolated by closing valve **24** is the leak continues according to the methods discussed herein.

During the curing process, transducers **19, 26, 48** and controller **50** continue to monitor the tire-membrane assemblies **18** for leaks. Each transducer **26** is arranged along a membrane fluid passage between a flow restrictor **28** and a curing membrane or curing chamber. Flow restrictor **28** controls or limits the flow rate along the fluid passage. In operation, the restrictor **28** may allow fluid flow rates associated with small leaks pass through the restrictor, while increased flow rates associated with greater leaks within a tire-member assembly are not allowed to pass completely, and therefore causes a back-up in pressure on the curing member side of the flow restrictor. A transducer **26** is able to measure this increase in pressure, while the controller 50 uses these measurements to determine if the leak is sufficiently large.

According to a particularly defined curing process *(i.e.,* a curing specification), pressures within either or both the curing chamber **20** and the sealed fluid chamber **16** within each tire-membrane assembly **18** may change at different stages of a curing process. For example, the sealed fluid chamber **16** may initially be under vacuum and later be increased to remain at a constant pressure above vacuum for a period of time, while the curing chamber pressure **P_{C}** may begin at a constant pressure **P_{C}**, **_{X}** for an initial period to later increase to a constant pressure **P_{C}**, **_{Y}** for a second period of time. Meanwhile, transducer **26** and controller **50** continue to monitor the pressure within membrane fluid passage **22** for any non-conforming change in pressure, such as when, for example, the pressure within any chamber is to remain constant. If controller **50** determines a change in pressure **P_{Δ}** is acceptable, such as being less than a threshold value **P_{Δ}**, **_{L}**, for example, then flow restrictor **28** continues to operate and allow sufficient passage of fluid flow associated with smaller leaks, if present. If, however, controller **50** determines a change in pressure **P_{Δ}** is significant, such as being above a threshold value **P_{Δ}, _{L}**, for example, an undesired leak is identified and controller **50** responds by automatically closing the valve **24** associated with the leak. Exemplary methods for determining a change in pressure and an undesired leak are discussed in paragraphs [0043]-[0044] above. Controller **50** also identifies the tire-membrane assembly **18** that has been determined to have a leak and a non-confirming cure, which may be accomplished through the user-interface **62** or any other means of notification known to one of ordinary skill in the art, such as via a printer or audible sound. By automatically closing the corresponding valve **24,** an undesired increase (or decrease) in pressure within the membrane fluid passage **22** will not sufficiently continue into the manifold **30** and into any other membrane fluid passage **22** to ultimately affect other tire-membrane assemblies **18.** This prevents other retreaded tires **12** from experiencing non-confirming cures, limits the non-conforming cure to the tire **12** associated with the leak. This is a significant improvement over prior art systems, as this can avoid the costs and time associated with having to reprocess all the tires contained within a curing chamber when experiencing a non-conforming cure.

While this invention has been described with reference to particular embodiments thereof, it shall be understood that such description is by way of illustration and not by way of limitation. Accordingly, the scope and content of the invention are to be defined only by the terms of the appended claims.

## Claims

1. A method for curing retreaded tires comprising the step of:
placing a plurality of tire-membrane assemblies (18) within a tire curing chamber (20) of a tire curing system (10), each tire-membrane assembly comprising a retreaded tire (12) and a flexible curing membrane (14) installed about at least a portion of the retreaded tire (12) to form a sealed fluid chamber (16) between the membrane (14) and the tire (12);
connecting a membrane fluid passage (22) to each curing membrane (14) of each tire-membrane assembly (18) where each passage (22) extends in fluid communication between one of the curing membranes and a pressure source and/or a vacuum source, each membrane fluid passage (22) including a transducer (26) for measuring pressure within the passage;
initiating a curing process whereby the fluid within the curing chamber (20) is heated to a desired temperature and pressurized to a desired pressure;
receiving a one or more signal responses from each transducer (26), each signal response being generated as a function of the fluid pressure contained within the one of the membrane fluid passages (22);
determining through a controller (50) whether the one or more signal responses received in the prior step indicate an undesired change in pressure in each corresponding curing membrane;
closing a valve (24) in operable communication with each membrane fluid passage (22) determined by the controller(50) in the preceding step to have experienced an undesired change in pressure, the step of closing being accomplished by the controller (50) sending a signal for the valve (24) to close.

2. The method of claim 1, wherein each membrane fluid passage (22) includes a flow restrictor (28) arranged to control the flow of fluid from the tire-membrane assembly, each flow restrictor arranged such that the transducer (26) of the passage is positioned between the flow restrictor (28) and the curing membrane (14).

3. The method of claim 1 wherein the step of determining includes comparing the one or more signal responses received in the step of receiving for each of the fluid passages (22) to one or more signals responses received from a transducer (26) in a manifold (30) to determine whether the undesired change in pressure is present within the curing membrane (14), the manifold signals being generated as a function of the fluid pressure contained within the manifold (30).

4. The method of claim 1, wherein:
a manifold (30) forms the membrane pressure source, the manifold (30) including a manifold transducer for measuring pressure within the manifold (30);
the step of receiving includes receiving one or more signal responses from the manifold transducer, the one or more signal responses generated as a function of the fluid pressure contained within the manifold (30), and receiving one or more signal responses from a curing chamber transducer, the one or more signal responses generated as a function of the fluid pressure contained within the curing chamber (20); and,
the step of determining includes calculating a first difference between a curing chamber pressure and a manifold pressure at a given time based upon the signals received during the step of receiving, calculating a second difference between a curing chamber pressure and a manifold pressure at a given time based upon the signals received during the step of receiving, and comparing the first difference with the second difference to determine whether an undesired leak is present.

5. The method of claim 1 further comprising the step of:
identifying each tire-membrane assembly (18) connected to each membrane fluid passage (22) having a valve (24) closed in the preceding step of closing, the step of identifying being facilitated by the controller (50).

6. The method of claim 5, where the step of identifying is accomplished by a user-interface.

7. The method of claim 1 further comprising the steps of:
receiving, before the step of initiating a curing process, one or more signal responses from each transducer (26) in operable communication with each membrane fluid passage (22), the one or more signal responses generated as a function of the fluid pressure contained within each corresponding membrane fluid passage (22) over a desired period of time;
determining, before the step of initiating a curing process, through the controller (50) whether the one or more signal responses received in the prior step indicate an undesired change in pressure;
identifying each tire-membrane assembly (18) connected to each membrane fluid passage (22) determined to have experienced an undesired change in pressure in the preceding step of determining, the step of indentifying being facilitated by the controller (50).

8. The method of claim 7, where the step of identifying is accomplished through a user-interface (62).

9. The method of claim 7 further comprising the step of:
opening the valve for a period of time and then subsequently closing the valve associated with each membrane fluid passage (22) before the step receiving recited in claim 6 and after the step of connecting identified in claim 1, before the step of initiating a curing process.

10. The method of claim 1 further comprising the step of:
verifying the connection of each fluid passage (22) to a tire-membrane assembly (18) from the step of connecting before the step of initiating by receiving one or more signal responses from each transducer (26), the one or more signal responses generated as a function of the fluid pressure contained within the one of the membrane fluid passages (22) over a desired period of time;
determining through the controller (50) whether the one or more signal responses received in the prior step indicate a desired change in pressure in each corresponding curing membrane (14);
indicating through the controller (50) that a proper connection was made between each membrane fluid passage (22) and the corresponding tire-membrane assembly (18) when the transducer (26) corresponding to each such tire-membrane assembly fluid passage (22) indicates a desired reduction in pressure subsequent to completing the step of connecting.

11. The method of claim 10, where the step of indicating is accomplished through a user- interface (62).

12. A computer program product including executable instructions embodied on a non-transitory computer readable storage medium (56), the computer program product providing instructions for determining leaks within a tire-membrane assembly (18) during retreaded tire curing operations, the computer program comprising:
initiating instructions for initiating a curing process whereby the fluid within the curing chamber (20) is heated to a desired temperature and pressurized to a desired pressure;
receiving instructions for receiving a one or more signal responses from each transducer (26), each signal response being generated as a function of the fluid pressure contained within the one of the membrane fluid passages (22);
determining instructions for determining through a controller (50) whether the one or more signal responses received in the prior step indicate an undesired change in pressure in each corresponding curing membrane (14);
closing instructions for closing a valve (24) in operable communication with each membrane fluid passage (22) determined by the controller (50) in the preceding step to have experienced an undesired change in pressure, the step of closing being accomplished by the controller (50) sending a signal for the valve (28) to close.

13. The computer program product of claim 12 further comprising:
identifying instructions for identifying each tire-membrane assembly (18) connected to each membrane fluid passage (22) having a valve (24) closed in the preceding step of closing, the step of identifying being facilitated by the controller (50).

14. The computer program product of claim 12 further comprising:
receiving instructions for receiving, before the step of initiating a curing process, one or more signal responses from each transducer(26) in operable communication with each membrane fluid passage (22), the one or more signal responses generated as a function of the fluid pressure contained within each corresponding membrane fluid passage (22) over a desired period of time;
determining instructions for determining, before the step of initiating a curing process, through the controller (50) whether the one or more signal responses received in the prior step indicate an undesired change in pressure;
identifying instructions for identifying each tire-membrane assembly connected to each membrane fluid passage (22) determined to have experienced an undesired change in pressure in the preceding step of determining, the step of indentifying being facilitated by the controller (50).

15. The computer program product of claim 12 further comprising:
verifying instructions for verifying the connection of each fluid passage (22) to a tire-membrane assembly (18) from the step of connecting before the step of initiating by receiving one or more signal responses from each transducer (26), the one or more signal responses generated as a function of the fluid pressure contained within the one of the membrane fluid passages (22) over a desired period of time;
determining instructions for determining through the controller (50) whether the one or more signal responses received in the prior step indicate a desired change in pressure in each corresponding curing membrane (14);
indicating instructions for indicating through the controller (50) that a proper connection was made between each membrane fluid passage (22) and the corresponding tire-membrane assembly (18) when the transducer corresponding to each such tire-membrane assembly fluid passage (22) indicates a desired reduction in pressure subsequent to completing the step of connecting.

## Patentansprüche

1. Verfahren zum Vulkanisieren von runderneuerten Reifen, das die folgenden Schritte umfasst:
das Platzieren mehrerer Reifen-Membran-Baugruppen (18) innerhalb einer Reifenvulkanisierungskammer (20) einer Reifenvulkanisierungsanlage (10), wobei jede Reifen-Membran-Baugruppe einen runderneuerten Reifen (12) und eine flexible Vulkanisierungsmembran (14), die um wenigstens einen Abschnitt des runderneuerten Reifens (12) installiert ist, um eine abgedichtete Fluidkammer (16) zwischen der Membran (14) und dem Reifen (12) zu bilden, umfasst,
das Verbinden eines Membran-Fluiddurchgangs (22) mit jeder Vulkanisierungsmembran (14) jeder Reifen-Membran-Baugruppe (18), wobei sich jeder Durchgang (22) in Fluidverbindung zwischen einer der Vulkanisierungsmembranen und einer Druckquelle und/oder einer Unterdruckquelle erstreckt, wobei jeder Membran-Fluiddurchgang (22) einen Wandler (26) zum Messen des Drucks innerhalb des Durchgangs einschließt,
das Einleiten eines Vulkanisierungsvorgangs, wodurch das Fluid innerhalb der Vulkanisierungskammer (20) bis zu einer gewünschten Temperatur erhitzt und bis zu einem gewünschten Druck unter Druck gesetzt wird,
das Empfangen einer oder mehrerer Signalantworten von jedem Wandler (26), wobei jede Signalantwort in Abhängigkeit von dem innerhalb des einen der Membran-Fluiddurchgänge (22) enthaltenen Fluiddruck erzeugt wird,
das Feststellen durch ein Steuergerät (50), ob die beim vorherigen Schritt empfangenen eine oder mehreren Signalantworten eine unerwünschte Änderung beim Druck in jeder entsprechenden Vulkanisierungsmembran anzeigen,
das Schließen eines Ventils (24) in wirksamer Verbindung mit jedem Membran-Fluiddurchgang (22), von dem durch das Steuergerät (50) beim vorhergehenden Schritt festgestellt wurde, dass er eine unerwünschte Änderung beim Druck erfahren hat, wobei der Schritt des Schließens dadurch ausgeführt wird, dass das Steuergerät (50) ein Signal sendet, damit das Ventil (24) schließt.

2. Verfahren nach Anspruch 1, wobei jeder Membran-Fluiddurchgang (22) einen Drosselkörper (28) einschließt, der dafür angeordnet ist, den Durchfluss von Fluid von der Reifen-Membran-Baugruppe zu steuern, wobei jeder Drosselkörper derart angeordnet ist, dass der Wandler (26) des Durchgangs zwischen dem Drosselkörper (28) und der Vulkanisierungsmembran (14) angeordnet ist.

3. Verfahren nach Anspruch 1, wobei der Schritt des Feststellens das Vergleichen einer oder mehrerer beim Schritt des Empfangens empfangener Signalantworten für jeden der Fluiddurchgänge (22) mit einer oder mehreren von einem Wandler (26) in einem Verteiler (30) empfangenen Signalantworten einschließt, um festzustellen, ob eine unerwünschte Änderung beim Druck innerhalb der Vulkanisierungsmembran (14) vorhanden ist, wobei die Verteilersignale in Abhängigkeit von dem innerhalb des Verteilers (30) enthaltenen Druck erzeugt werden.

4. Verfahren nach Anspruch 1, wobei:
ein Verteiler (30) die Membrandruckquelle bildet, wobei der Verteiler (30) einen Verteilerwandler zum Messen eines Drucks innerhalb des Verteilers (30) einschließt,
der Schritt des Empfangens das Empfangen einer oder mehrerer Signalantworten von dem Verteilerwandler, wobei die eine oder die mehreren Signalantworten in Abhängigkeit von dem innerhalb des Verteilers (30) enthaltenen Druck erzeugt werden, und das Empfangen einer oder mehrerer Signalantworten von dem einem Vulkanisierungskammerwandler, wobei die eine oder die mehreren Signalantworten in Abhängigkeit von dem innerhalb der Vulkanisierungskammer (20) enthaltenen Druck erzeugt werden, einschließt und
der Schritt des Feststellens das Berechnen einer ersten Differenz zwischen einem Vulkanisierungskammerdruck und einem Verteilerdruck zu einer gegebenen Zeit auf der Grundlage der während des Schrittes des Empfangens empfangenen Signale, das Berechnen einer zweiten Differenz zwischen einem Vulkanisierungskammerdruck und einem Verteilerdruck zu einer gegebenen Zeit auf der Grundlage der während des Schrittes des Empfangens empfangenen Signale und das Vergleichen der ersten Differenz mit der zweiten Differenz, um festzustellen, ob ein unerwünschtes Leck vorhanden ist, einschließt.

5. Verfahren nach Anspruch 1, das ferner den folgenden Schritt umfasst:
das Identifizieren jeder mit jedem Membran-Fluiddurchgang (22), der ein beim vorhergehenden Schritt des Schließens geschlossenes Ventil (24) hat, verbundenen Reifen-Membran-Baugruppe (18), wobei der Schritt des Identifizierens durch das Steuergerät (50) erleichtert wird.

6. Verfahren nach Anspruch 5, wobei der Schritt des Identifizierens durch eine Benutzerschnittstelle ausgeführt wird.

7. Verfahren nach Anspruch 1, das ferner die folgenden Schritte umfasst:
das Empfangen, vor dem Schritt des Einleitens eines Vulkanisierungsvorgangs, einer oder mehrerer Signalantworten von jedem Wandler (26) in wirksamer Verbindung mit jedem Membran-Fluiddurchgang (22), wobei die eine oder die mehreren Signalantworten in Abhängigkeit von dem innerhalb jedes Membran-Fluiddurchgangs (22) enthaltenen Druck über einen gewünschten Zeitraum erzeugt werden,
das Feststellen, vor dem Schritt des Einleitens eines Vulkanisierungsvorgangs, durch das Steuergerät (50), ob die beim vorherigen Schritt empfangenen eine oder mehreren Signalantworten eine unerwünschte Änderung beim Druck anzeigen,
das Identifizieren jeder mit jedem Membran-Fluiddurchgang (22), von dem beim Schritt des Feststellens festgestellt wurde, dass er eine unerwünschte Änderung beim Druck erfahren hat, verbundenen Reifen-Membran-Baugruppe (18), wobei der Schritt des Identifizierens durch das Steuergerät (50) erleichtert wird.

8. Verfahren nach Anspruch 7, wobei der Schritt des Identifizierens durch eine Benutzerschnittstelle (62) ausgeführt wird.

9. Verfahren nach Anspruch 7, das ferner den folgenden Schritt umfasst:
das Öffnen des Ventils für einen Zeitraum und danach anschließend das Schließen des mit jedem Membran-Fluiddurchgang (22) verknüpften Ventils vor dem in Anspruch 6 angegebenen Schritt des Empfangens und nach dem in Anspruch 1 identifizierten Schritt des Verbindens, vor dem Schritt des Einleitens eines Vulkanisierungsvorgangs.

10. Verfahren nach Anspruch 1, das ferner den folgenden Schritt umfasst:
das Überprüfen der Verbindung jedes Membran-Fluiddurchgangs (22) zu einer Reifen-Membran-Baugruppe (18) von dem Schritt des Verbindens vor dem Schritt des Einleitens durch das Empfangen einer oder mehrerer Signalantworten von jedem Wandler (26), wobei die eine oder die mehreren Signalantworten in Abhängigkeit von dem innerhalb des einen der Membran-Fluiddurchgänge (22) enthaltenen Fluiddruck über einen gewünschten Zeitraum erzeugt werden,
das Feststellen durch das Steuergerät (50), ob die empfangenen eine oder mehreren Signalantworten eine gewünschte Änderung beim Druck in jeder entsprechenden Vulkanisierungsmembran (14) anzeigen,
das Anzeigen durch das Steuergerät (50), dass eine richtige Verbindung zwischen jedem Membran-Fluiddurchgang (22) und der entsprechenden Reifen-Membran-Baugruppe (18) hergestellt wurde, wenn der jedem solchen Reifen-Membran-Baugruppe-Fluiddurchgang (22) entsprechende Wandler (26) anschließend an das Abschließen des Schritts des Verbindens eine gewünschte Verringerung beim Druck anzeigt.

11. Verfahren nach Anspruch 10, wobei der Schritt des Anzeigens durch eine Benutzerschnittstelle (62) ausgeführt wird.

12. Rechnerprogrammerzeugnis, das ausführbare Anweisungen einschließt, die auf einem nichtflüchtigen rechnerlesbaren Speichermedium (56) enthalten sind, wobei das Rechnerprogrammerzeugnis Anweisungen zum Feststellen von Lecks innerhalb einer Reifen-Membran-Baugruppe (18) während Vulkanisierungsvorgängen runderneuerter Reifen bereitstellt, wobei das Rechnerprogramm Folgendes umfasst:
Einleitungsanweisungen für das Einleiten eines Vulkanisierungsvorgangs, wobei das Fluid innerhalb der Vulkanisierungskammer (20) bis zu einer gewünschten Temperatur erhitzt und bis zu einem gewünschten Druck unter Druck gesetzt wird,
Empfangsanweisungen für das Empfangen einer oder mehrerer Signalantworten von jedem Wandler (26), wobei jede Signalantwort in Abhängigkeit von dem innerhalb des einen der Membran-Fluiddurchgänge (22) enthaltenen Fluiddruck erzeugt wird,
Feststellungsanweisungen für das Feststellen durch ein Steuergerät (50), ob die beim vorherigen Schritt empfangenen eine oder mehreren Signalantworten eine unerwünschte Änderung beim Druck in jeder entsprechenden Vulkanisierungsmembran (14) anzeigen,
Schließungsanweisungen für das Schließen eines Ventils (24) in wirksamer Verbindung mit jedem Membran-Fluiddurchgang (22), von dem durch das Steuergerät (50) beim vorhergehenden Schritt festgestellt wurde, dass er eine unerwünschte Änderung beim Druck erfahren hat, wobei der Schritt des Schließens dadurch ausgeführt wird, dass das Steuergerät (50) ein Signal sendet, damit das Ventil (28) schließt.

13. Rechnerprogrammerzeugnis nach Anspruch 12, das ferner Folgendes umfasst:
Identifizierungsanweisungen für das Identifizieren jeder mit jedem Membran-Fluiddurchgang (22), der ein beim vorhergehenden Schritt des Schließens geschlossenes Ventil (24) hat, verbundenen Reifen-Membran-Baugruppe (18), wobei der Schritt des Identifizierens durch das Steuergerät (50) erleichtert wird.

14. Rechnerprogrammerzeugnis nach Anspruch 12, das ferner Folgendes umfasst:
Empfangsanweisungen für das Empfangen, vor dem Schritt des Einleitens eines Vulkanisierungsvorgangs, einer oder mehrerer Signalantworten von jedem Wandler (26) in wirksamer Verbindung mit jedem Membran-Fluiddurchgang (22), wobei die eine oder die mehreren Signalantworten in Abhängigkeit von dem innerhalb jedes Membran-Fluiddurchgangs (22) enthaltenen Druck über einen gewünschten Zeitraum erzeugt werden,
Feststellungsanweisungen für das Feststellen, vor dem Schritt des Einleitens eines Vulkanisierungsvorgangs, durch das Steuergerät (50), ob die beim vorherigen Schritt empfangenen eine oder mehreren Signalantworten eine unerwünschte Änderung beim Druck anzeigen,
Identifizierungsanweisungen für das Identifizieren jeder mit jedem Membran-Fluiddurchgang (22), von dem beim Schritt des Feststellens festgestellt wurde, dass er eine unerwünschte Änderung beim Druck erfahren hat, verbundenen Reifen-Membran-Baugruppe, wobei der Schritt des Identifizierens durch das Steuergerät (50) erleichtert wird.

15. Rechnerprogrammerzeugnis nach Anspruch 12, das ferner Folgendes umfasst:
Überprüfungsanweisungen für das Überprüfen der Verbindung jedes Membran-Fluiddurchgangs (22) zu einer Reifen-Membran-Baugruppe (18) von dem Schritt des Verbindens vor dem Schritt des Einleitens durch das Empfangen einer oder mehrerer Signalantworten von jedem Wandler (26), wobei die eine oder die mehreren Signalantworten in Abhängigkeit von dem innerhalb des einen der Membran-Fluiddurchgänge (22) enthaltenen Fluiddruck über einen gewünschten Zeitraum erzeugt werden,
Feststellungsanweisungen für das Feststellen durch das Steuergerät (50), ob die empfangenen eine oder mehreren Signalantworten eine gewünschte Änderung beim Druck in jeder entsprechenden Vulkanisierungsmembran (14) anzeigen,
Anzeigeanweisungen für das Anzeigen durch das Steuergerät (50), dass eine richtige Verbindung zwischen jedem Membran-Fluiddurchgang (22) und der entsprechenden Reifen-Membran-Baugruppe (18) hergestellt wurde, wenn der jedem solchen Reifen-Membran-Baugruppe-Fluiddurchgang (22) entsprechende Wandler anschließend an das Abschließen des Schritts des Verbindens eine gewünschte Verringerung beim Druck anzeigt.

## Revendications

1. Procédé de cuisson de pneumatiques rechapés comprenant les étapes suivantes :
placer une pluralité d'ensembles pneumatique-membrane (18) à l'intérieur d'une chambre de cuisson de pneumatiques (20) d'un système de cuisson de pneumatiques (10), chaque ensemble pneumatique-membrane comprenant un pneumatique rechapé (12) et une membrane de cuisson souple (14) installée autour d'au moins une partie du pneumatique rechapé (12) pour former une chambre à fluide hermétique (16) entre la membrane (14) et le pneumatique (12) ;
connecter un passage de fluide de membrane (22) à chaque membrane de cuisson (14) de chaque ensemble pneumatique-membrane (18) où chaque passage (22) s'étend en communication de fluide entre l'une des membranes de cuisson et une source de pression et/ou source de dépression, chaque passage de fluide de membrane (22) comprenant un transducteur (26) pour mesurer la pression dans le passage ;
lancer un processus de cuisson dans lequel le fluide présent à l'intérieur de la chambre de cuisson (20) est chauffé à une température voulue et mis sous pression à une pression voulue ;
recevoir un ou plusieurs signaux de réponse de chaque transducteur (26), chaque signal de réponse étant généré en fonction de la pression de fluide contenue dans le passage de fluide de membrane (22) ;
déterminer par l'intermédiaire d'un dispositif de commande (50) si lesdits un ou plusieurs signaux de réponse reçus dans l'étape précédente indiquent une variation de pression non souhaitée dans chaque membrane de cuisson correspondante ;
fermer une vanne (24), en communication actionnable avec chaque passage de fluide de membrane (22), dont le dispositif de commande (50) a déterminé à l'étape précédente qu'elle a connu une variation de pression non souhaitée, l'étape de fermeture étant accomplie par le dispositif de commande (50) qui envoie un signal pour que la vanne (24) se ferme.

2. Procédé selon la revendication 1, dans lequel chaque passage de fluide de membrane (22) comprend un réducteur de débit (28) agencé pour commander le débit de fluide provenant de l'ensemble pneumatique-membrane, chaque réducteur de débit étant agencé de telle manière que le transducteur (26) du passage est positionné entre le réducteur de débit (28) et la membrane de cuisson (14).

3. Procédé selon la revendication 1, dans lequel l'étape de détermination comprend le fait de comparer le ou les signaux de réponse reçu(s) à l'étape de réception pour chacun des passages de fluide (22) avec un ou plusieurs signaux de réponse transmis par un transducteur (26) présent dans un collecteur (30) pour déterminer si la variation de pression non souhaitée est présente à l'intérieur de la membrane de cuisson (14), les signaux du collecteur étant générés en fonction de la pression de fluide contenue dans le collecteur (30).

4. Procédé selon la revendication 1, dans lequel :
un collecteur (30) forme la source de pression de membrane, le collecteur (30) comprenant un transducteur de collecteur pour mesurer la pression à l'intérieur du collecteur (30) ;
l'étape de réception comprend la réception d'un ou de plusieurs signaux de réponse du transducteur de collecteur, le ou les signaux de réponse étant générés en fonction de la pression de fluide contenue dans le collecteur (30), et la réception d'un ou de plusieurs signaux de réponse d'un transducteur de chambre de cuisson, le ou les signaux de réponse étant générés en fonction de la pression de fluide contenue dans la chambre de cuisson (20) ; et
l'étape de détermination comprend le calcul d'une première différence entre une pression de chambre de cuisson et une pression de collecteur à un instant donné basé sur les signaux reçus pendant l'étape de réception, le calcul d'une deuxième différence entre une pression de chambre de cuisson et une pression de collecteur à un instant donné basé sur les signaux reçus pendant l'étape de réception, et la comparaison de la première différence avec la deuxième différence pour déterminer si une fuite non souhaitée est présente.

5. Procédé selon la revendication 1, comprenant en outre l'étape suivante :
identifier chaque ensemble pneumatique-membrane (18) connecté à chaque passage de fluide de membrane (22) ayant une vanne (24) fermée dans la précédente étape de fermeture, l'étape d'identification étant facilitée par le dispositif de commande (50).

6. Procédé selon la revendication 5, dans lequel l'étape d'identification est accomplie par une interface utilisateur.

7. Procédé selon la revendication 1, comprenant en outre les étapes suivantes :
recevoir, avant l'étape de lancement d'un processus de cuisson, un ou plusieurs signaux de réponse de chaque transducteur (26) en communication actionnable avec chaque passage de fluide de membrane (22), le ou les signaux de réponse étant générés en fonction de la pression de fluide contenue dans chaque passage de fluide de membrane correspondant (22) sur un intervalle de temps choisi ;
déterminer, avant l'étape de lancement d'un processus de cuisson, par l'intermédiaire du dispositif de commande (50), si le ou les signaux de réponse reçus à l'étape précédente indiquent une variation de pression non souhaitée ;
identifier chaque ensemble pneumatique-membrane (18) connecté à chaque passage de fluide de membrane (22) dont il a été déterminé qu'il a connu une variation de pression non souhaitée dans la précédente étape de détermination, l'étape d'identification étant facilitée par le dispositif de commande (50).

8. Procédé selon la revendication 7, dans lequel l'étape d'identification est accomplie par l'intermédiaire d'une interface utilisateur (62).

9. Procédé selon la revendication 7, comprenant en outre l'étape suivante :
ouvrir la vanne pendant un intervalle de temps puis fermer la vanne associée à chaque passage de fluide de membrane (22) avant l'étape de réception décrite dans la revendication 6 et après l'étape de connexion identifiée dans la revendication 1, avant l'étape de lancement d'un processus de cuisson.

10. Procédé selon la revendication 1, comprenant en outre l'étape suivante :
vérifier la connexion de chaque passage de fluide (22) avec un ensemble pneumatique-membrane (18) provenant de l'étape de connexion avant l'étape de lancement en recevant un ou plusieurs signaux de réponse de chaque transducteur (26), lesdits un ou plusieurs signaux de réponse étant générés en fonction de la pression de fluide contenue dans le passage de fluide de membrane (22) sur un intervalle de temps choisi ;
déterminer par l'intermédiaire du dispositif de commande (50) si le ou les signaux de réponse reçu(s) à l'étape précédente indiquent une variation de pression souhaitée dans chaque membrane de cuisson correspondante (14) ;
indiquer par l'intermédiaire du dispositif de commande (50) qu'une connexion correcte a été réalisée entre chaque passage de fluide de membrane (22) et l'ensemble pneumatique-membrane correspondant (18) quand le transducteur (26) correspondant à chaque passage de fluide d'ensemble pneumatique-membrane (22) ainsi défini indique une réduction souhaitée de la pression suite à l'achèvement de l'étape de connexion.

11. Procédé selon la revendication 10, dans lequel l'étape d'indication est accomplie par l'intermédiaire d'une interface utilisateur (62).

12. Produit de programme informatique comprenant des instructions exécutables enregistrées sur un support de stockage non temporaire lisible par ordinateur (56), le produit de programme informatique fournissant des instructions pour déterminer des fuites dans un ensemble pneumatique-membrane (18) au cours d'opérations de cuisson de pneumatiques rechapés, le programme informatique comprenant :
des instructions de lancement pour lancer un processus de cuisson dans lequel le fluide présent dans la chambre de cuisson (20) est chauffé à une température voulue et mis sous pression à une pression voulue ;
des instructions de réception pour recevoir un ou plusieurs signaux de réponse de chaque transducteur (26), chaque signal de réponse étant généré en fonction de la pression de fluide contenue dans le passage de fluide de membrane (22) ;
des instructions de détermination pour déterminer par l'intermédiaire d'un dispositif de commande (50) si lesdits un ou plusieurs signaux de réponse reçus dans l'étape précédente indiquent une variation de pression non souhaitée dans chaque membrane de cuisson correspondante (14) ;
des instructions de fermeture pour fermer une vanne (24), en communication actionnable avec chaque passage de fluide de membrane (22), dont le dispositif de commande (50) a déterminé à l'étape précédente qu'elle a connu une variation de pression non souhaitée, l'étape de fermeture étant accomplie par le dispositif de commande (50) qui envoie un signal pour que la vanne (28) se ferme.

13. Produit de programme informatique selon la revendication 12, comprenant en outre :
des instructions d'identification pour identifier chaque ensemble pneumatique-membrane (18) connecté à chaque passage de fluide de membrane (22) ayant une vanne (24) fermée dans la précédente étape de fermeture, l'étape d'identification étant facilitée par le dispositif de commande (50).

14. Produit de programme informatique selon la revendication 12, comprenant en outre :
des instructions de réception pour recevoir, avant l'étape de lancement d'un processus de cuisson, un ou plusieurs signaux de réponse de chaque transducteur (26) en communication actionnable avec chaque passage de fluide de membrane (22), le ou les signaux de réponse étant générés en fonction de la pression de fluide contenue dans chaque passage de fluide de membrane correspondant (22) sur un intervalle de temps choisi ;
des instructions de détermination pour déterminer, avant l'étape de lancement d'un processus de cuisson, par l'intermédiaire du dispositif de commande (50), si le ou les signaux de réponse reçus à l'étape précédente indiquent une variation de pression non souhaitée ;
des instructions d'identification pour identifier chaque ensemble pneumatique-membrane connecté à chaque passage de fluide de membrane (22) dont il a été déterminé qu'il a connu une variation de pression non souhaitée dans la précédente étape de détermination, l'étape d'identification étant facilitée par le dispositif de commande (50).

15. Produit de programme informatique selon la revendication 12, comprenant en outre :
des instructions de vérification pour vérifier la connexion de chaque passage de fluide (22) avec un ensemble pneumatique-membrane (18) provenant de l'étape de connexion avant l'étape de lancement en recevant un ou plusieurs signaux de réponse de chaque transducteur (26), lesdits un ou plusieurs signaux de réponse étant générés en fonction de la pression de fluide contenue dans le passage de fluide de membrane (22) sur un intervalle de temps choisi ;
des instructions de détermination pour déterminer par l'intermédiaire du dispositif de commande (50) si le ou les signaux de réponse reçu(s) à l'étape précédente indiquent une variation de pression souhaitée dans chaque membrane de cuisson correspondante (14) ;
des instructions d'indication pour indiquer par l'intermédiaire du dispositif de commande (50) qu'une connexion correcte a été réalisée entre chaque passage de fluide de membrane (22) et l'ensemble pneumatique-membrane correspondant (18) quand le transducteur correspondant à chaque passage de fluide d'ensemble pneumatique-membrane (22) ainsi défini indique une réduction souhaitée de la pression suite à l'achèvement de l'étape de connexion.
